# EUROPÄISCHE PATENTSCHRIFT

(11) **EP 2 133 659 B1**
(45) Veröffentlichungstag und Bekanntmachung des Hinweises auf die Patenterteilung: **14.11.2018**
(21) Anmeldenummer: 09007218.2
(22) Anmeldetag: 29.05.2009
(51) Int. Cl.: G01B 11/00, G01S 7/497, G01S 17/06, G01B 21/04, B23Q 17/22, G01C 15/00

(54) **Verfahren und Vorrichtung zur Ermittlung der Lage eines Sensors**
Method and device for determining the position of a sensor
Procédé et dispositif destinés à la détermination de la position d'un capteur

(30) Priorität: 12.06.2008 DE 102008027976
(43) Veröffentlichungstag der Anmeldung: 16.12.2009
(73) Patentinhaber: Carl Zeiss Optotechnik GmbH, 83115 Neubeuern (DE)
(72) Erfinder: Mayer, Thomas, 83059 Kolbermoor (DE); Naßwetter, Thomas, 83131 Nußdorf am Inn (DE); Steinbichler, Marcus, 83115 Neubeuern (DE); Weber, Andreas, 83022 Rosenheim (DE)
(74) Vertreter: Kirchner, Veit

(56) Entgegenhaltungen:
- EP-A- 1 703 300
- EP-A- 1 724 549
- EP-A1- 1 447 644
- WO-A-03/062744
- WO-A1-02/086418
- WO-A1-2005/108020
- WO-A1-2007/079601
- US-A- 4 621 926
- US-A- 5 819 206
- US-A- 5 973 788
- US-A- 5 983 166

## Beschreibung

Die Erfindung betrifft ein Verfahren und eine Vorrichtung zur Ermittlung der räumlichen Lage eines Sensors, insbesondere zur Ermittlung der translatorischen und rotatorischen Lage eines 3D-Sensors zur dreidimensionalen Digitalisierung bzw. dreidimensionalen Vermessung großer Objekte.

Ein Verfahren zur dreidimensionalen Digitalisierung (3D-Digitalisierung) von Objekten ist beispielsweise aus der DE 10 2005 043 912 A1 bekannt. Zur 3D-Digitalisierung wird ein 3D-Sensor verwendet, der die dreidimensionalen Koordinaten (3D-Koordinaten) der Oberfläche eines Objekts bestimmt. Dabei ist es in der Regel notwendig, den 3D-Sensor im Raum in verschiedene Aufnahmepositionen zu bewegen, um die gesamte zu vermessende Objektoberfläche aus an den einzelnen Aufnahmepositionen gemessenen Teiloberflächen zusammenzusetzen. Das Zusammensetzen erfordert die Registrierung der einzelnen Aufnahmepositionen in einem übergeordneten Koordinatensystem. Diese sogenannte globale Registrierung erfordert hohe Genauigkeit.

Bei der Verwendung eines Weißlicht-Streifenprojektionssystems als 3D-Sensor ist es bekannt die globale Registrierung im Wege der Photogrammetrie vorzunehmen. Dazu müssen Marken auf dem Objekt oder einer Kulisse angebracht und separat mit einer Photogrammetrieausrüstung gemessen werden. Die Photogrammetrie bietet hohe Genauigkeit, ist aber nachteilig wegen des zusätzlichen Aufwands für Präparation mit den Marken und deren separate Messung.

Des Weiteren ist es bekannt, die Lage des 3D-Sensors mit einem Lasertracker zu messen, um mit Hilfe dieser Meßdaten die globale Registrierung jeder einzelnen Aufnahmeposition vorzunehmen. Dazu müssen mindestens drei geeignete Reflektoren an dem 3D-Sensor angebracht werden, und in jeder Aufnahmeposition des 3D-Sensors müssen die Reflektoren sukzessive mit dem Laserstrahl des Lasertrackers gemessen werden. Die Meßdaten des Lasertrackers erlauben eine globale Registrierung mit höchster Genauigkeit. Nachteilig ist allerdings das zeitaufwändige Auffinden der Reflektoren im Raum nach einer Umpositionierung des 3D-Sensors, was die benötigte Zeit zur Digitalisierung des Meßobjekts verlängert.

Die WO 03/062744 A1 betrifft ein Laserbasiertes Messsystem, wobei mittels eines Lasertrackingsystems ein Oberflächenaufnahmeerfassungstift getrackt werden kann. Dieser Oberflächenaufnahmeerfassungstift weist einen Reflektor auf, der den Laserstrahl zur Messstation des Messsystems reflektiert.

Die US 5,983,166 betrifft ein Messsystem, das einen Roboter mit einem Roboterarm und einem daran befestigten dreidimensionalen visuellen Sensor zur Messung bzw. Vermessung eines Objektes aufweist.

Die WO 2007/079601 A1 zeigt ein Verfahren zur Ermittlung der räumlichen Lage eines Sensors, das sämtliche Verfahrensschritte aus dem Oberbegriff des Anspruchs 1 aufweist.
Aus der WO 2005/108020 A1 ist eine robotergeführte optische Messanordnung bekannt, in der eine Hilfsvorrichtung zum Einmessen der Anordnung beschrieben ist. Weiter wird darin offenbart, drei Reflektoren einem Objekt zuzuordnen, um die Präzision und Vollständigkeit einer Positionsmessung zu gewährleisten bzw. zu erhöhen.
Aufgabe der vorliegenden Erfindung ist es daher, ein verbessertes Verfahren und eine verbesserte Vorrichtung zur Ermittlung der räumlichen Lage eines Sensors vorzuschlagen. Insbesondere sollen das erfindungsgemäße Verfahren und die erfindungsgemäße Vorrichtung eine hohe Genauigkeit der globalen Registrierung eines 3D-Sensors bei geringem Zeitaufwand ermöglichen.
Die Aufgabe wird erfindungsgemäß gelöst durch ein Verfahren nach Anspruch 1 und eine Vorrichtung nach Anspruch 4. Vorteilhafte Ausgestaltungen sind in den Unteransprüchen beschrieben.
Das erfindungsgemäße Verfahren zur Ermittlung der Lage eines Sensors zeichnet sich dadurch aus, daß die Lage zunächst gröber und dann genauer ermittelt wird. Die grobe Erfassung der Lage des Sensors muß nicht mit hoher Genauigkeit erfolgen, insbesondere nicht mit der Genauigkeit, die für die globale Registrierung letztlich angestrebt wird. Besonders vorteilhaft ist die Verwendung von Mitteln, die eine einfache und schnelle Lageermittlung erlauben. Nach der Ermittlung der groben Lage erfolgt dann die genauere Ermittlung der Lage mittels eines Lasertrackers. Dazu werden mindestens drei geeignete Reflektoren, die am Sensor angebracht sind, mit dem Lasertracker gesucht und gemessen. Dabei wird der Suchbereich, in dem der Laser des Lasertrackers die Reflektoren sucht, anhand der bei der Erfassung der groben Lage des Sensors gewonnenen groben Lageinformation eingeschränkt. Dies ermöglicht ein schnelleres Auffinden der Reflektoren mit dem Lasertracker, so daß die Messung der Reflektoren mit dem Lasertracker schneller erfolgen kann.

So wird mit der Erfindung der Vorteil erreicht, daß einerseits die hohe Genauigkeit des Lasertrackers genutzt und andererseits durch die Verwendung der groben Lageinformation eine besonders schnelle Messung der Lage des 3D-Sensors mit dem Lasertracker ermöglicht wird. Damit erlaubt die Erfindung eine besonders schnelle globale Registrierung bzw. besonders schnelle Ermittlung der globalen Lage des Sensors bei gleichzeitig hoher Genauigkeit erreicht.

Die Reflektoren können auch mit Haltern oder Auslegern am Sensor angebracht sein. Vorteilhafterweise werden die Reflektoren am Korpus des Sensors angebracht oder starr mit diesem verbundenen. Weiter vorteilhaft wird die Lage der Reflektoren nach ihrer Anbringung am Sensor nicht mehr verändert und dann die relative Lage der Reflektoren zueinander und/oder zum Sensor ermittelt. Aus der relativen Lage der Reflektoren und der mit dem Lasertracker zu erfassenden globalen Lage der Reflektoren kann die globale Lage des Sensors im Raum hinsichtlich Translation und Rotation ermittelt werden. In einer weiter vorteilhaften Ausgestaltung der Erfindung wird die relative Lage der Reflektoren zueinander und/oder zum Sensor durch Vermessung mit dem Lasertracker bestimmt.

Gemäß der Erfindung wird die grobe Lageinformation für den Sensor bzw. für die Reflektoren am Sensor aus den Positionsinformationen eines Roboters, mit dem der Sensor bewegt wird, gewonnen. In gleicher Weise kann die grobe Lageinformation auch aus den Positionsinformationen eines andersartigen Achssystems, mit dem der Sensor bewegt wird, gewonnen werden.
In einem illustrativen Beispiel wird die grobe Lageinformation durch eine oder mehrere zusätzliche Kameras, die den Meßraum beobachten, gewonnen.
In einem weiteren illustrativen Beispiel wird die grobe Lageinformation mit einem Beschleunigungssensor und einem Neigungssensor gewonnen, mit denen die Translation und die Rotation des Sensors bei seiner Bewegung, beispielsweise zwischen den einzelnen Aufnahmepositionen, erfaßt wird.

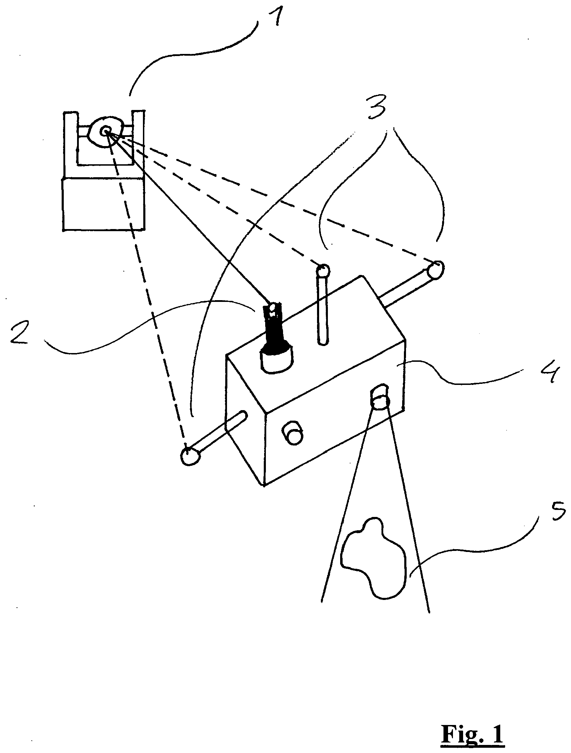

In einem dritten illustrativen Beispiel wird die grobe Lageinformation durch einen zusätzlichen 6D-Sensor gewonnen, der am Sensor angebracht ist. Ein solcher 6D-Sensor erfaßt die Lage in sechs Dimensionen, nämlich drei translatorischen und drei rotatorischen Dimensionen.
Ein Beispiel wird anhand der Figur 1 erläutert. Dabei zeigt:
- Fig. 1:: Eine schematische Ansicht einer Vorrichtung.
Figur 1 zeigt eine Vorrichtung zur Vermessung eines Meßobjekts 5. Die Vorrichtung umfaßt einen 3D-Sensor 4 zur 3D-Digitalisierung der Oberfläche des Meßobjekts 5.
Der 3D-Sensor kann beispielsweise als Weißlicht-Streifenprojektionssystem ausgebildet sein. Am starren Korpus des 3D-Sensors 4 sind mit starren Auslegern drei Reflektoren 3 angebracht. Die Lage der drei Reflektoren 3 am 3D-Sensor 4 bleibt unverändert.
Die Vorrichtung umfaßt weiter einen Lasertracker 1, mit dem zum einen der 3D-Sensor mit höchster Genauigkeit vermessen und zum anderen die Lage der Reflektoren 3 im Raum mit höchster Genauigkeit bestimmt werden kann. Außerdem umfaßt die Vorrichtung einen 6D-Sensor 2, der am Korpus des 3D-Sensors 4 angebracht ist. Mit diesem 6D-Sensor kann die Lage des 3D-Sensors hinsichtlich Translation und Rotation grob ermittelt werden.
Gemäß einem illustrativen Beispiel des erfindungsgemäßen Verfahrens wird mit dem Lasertracker 1 zunächst der 3D-Sensor 4 samt daran angebrachten Reflektoren 3 vermessen. Auf dieser Grundlage wird die relative Lage der Reflektoren 3 zueinander ermittelt. Dann wird das Meßobjekt 5 zum Zweck der 3D-Digitalisierung mit dem 3D-Sensor 4 aus verschiedenen Aufnahmepositionen gemessen. Dabei wird gemäß einem nicht beanspruchten Beispiel in jeder Aufnahmeposition zunächst mit dem 6D-Sensor 2 die grobe Lage des 3D-Sensors 4 sowie die grobe Lage der Reflektoren 3 ermittelt. Gemäß der Erfindung wird die grobe Lageinformation für den Sensor bzw. für die Reflektoren am Sensor aus den Positionsinformationen eines Roboters mit dem der Sensor bewegt wird oder aus den Positionsinformationen eines andersartigen Achssystems, gewonnen. Diese grobe Lageinformation wird genutzt, um den Suchbereich, in dem der Laser des Lasertrackers 1 nach den Reflektoren 3 sucht, so stark wie möglich zu beschränken. In den stark beschränkten Suchbereichen sucht der Lasertracker die Reflektoren und bestimmt deren Lage mit höchster Genauigkeit. Aus der mit dem Lasertracker 1 ermittelten Positionen der Reflektoren 3 und der bekannten Lage der Reflektoren 3 zueinander wird dann die globale Position des 3D-Sensors hinsichtlich Translation und Rotation berechnet.

Auf diese Weise erfolgt eine besonders schnelle und besonders genaue globale Registrierung eines Sensors zur 3D-Digitalisierung großer Objekte.

## Patentansprüche

1. Verfahren zur Ermittlung der räumlichen Lage eines Sensors (4) an verschiedenen Aufnahmepositionen, bei dem zur Ermittlung der Lage an jeder einzelnen der verschiedenen Aufnahmepositionen:
zunächst mit Mitteln zur Gewinnung einer groben Lageinformation eine grobe Lageinformation durch grobe Erfassung der Lage des Sensors gewonnen wird, und
dann die genauere Lage des Sensors durch Messung von mindestens drei am Sensor angebrachten Reflektoren (3) mit einem Lasertracker (1) ermittelt wird, wobei
der Suchbereich des Lasers des Lasertrackers für die Reflektoren anhand der groben Lageinformation eingeschränkt wird,
**dadurch gekennzeichnet, dass**
die grobe Lageinformation aus den Positionsinformationen eines Roboters oder andersartigen Achssystems, mit dem der Sensor bewegt wird, gewonnen wird.

2. Verfahren nach Anspruch 1, bei dem die Lage der mindestens drei Reflektoren nach Anbringung am Sensor unverändert bleibt, und die Lage der Reflektoren relativ zum Sensor und/oder relativ zueinander ermittelt wird.

3. Verfahren nach dem vorhergehenden Anspruch, bei dem die relative Lage der Reflektoren durch Vermessung mit dem Lasertracker ermittelt wird.

4. Vorrichtung zur Ermittlung der räumlichen Lage eines Sensors (4) an verschiedenen Aufnahmepositionen mit:
Mitteln (2) zur Gewinnung einer groben Lageinformation durch grobe Erfassung der Lage des Sensors an jeder einzelnen der verschiedenen Aufnahmepositionen,
einem Lasertracker (1) zur Ermittlung der genaueren Lage des Sensors durch Messung der Lage von mindestens drei am Sensor angebrachten Reflektoren (3), und
Mitteln zur Beschränkung des Suchbereich des Lasers des Lasertrackers für die Reflektoren anhand der groben Lageinformation,
**gekennzeichnet durch**
einen Roboter oder ein andersartiges Achssystem zur Bewegung des Sensors und Mitteln zur Gewinnung der groben Lageinformation aus den Positionsinformationen des Roboters oder des Achssystems.

## Claims

1. Method for determining the spatial position of a sensor (4) at various recording positions, in which in order to determine the position at each individual one of the various recording positions:
a rough position information initially is obtained with means for obtaining a rough position information by rough detection of the position of the sensor, and
the more accurate position of the sensor then is determined by measuring at least three reflectors (3) mounted on the sensor with a laser tracker (1), wherein
the search region of the laser of the laser tracker is limited for the reflectors with reference to the rough position information,
**characterized in that**
the rough position information is obtained from the position information of a robot or another kind of axle system used for moving the sensor.

2. Method according to Claim 1, in which the position of the at least three reflectors remains unchanged after mounting the same on the sensor, and the position of the reflectors relative to the sensor and/or relative to each other is determined.

3. Method according to the preceding claim, in which the relative position of the reflectors is determined by measurement with the laser tracker.

4. Device for determining the spatial position of a sensor (4) at various recording positions with:
means (2) for obtaining a rough position information by rough detection of the position of the sensor at each individual one of the various recording positions,
a laser tracker (1) for determining the more accurate position of the sensor by measuring the position of at least three reflectors (3) mounted on the sensor and
means for limiting the search region of the laser of the laser tracker for the reflectors with reference to the rough position information,
**characterized by**
a robot or another kind of axle system for moving the sensor and means for obtaining the rough position information from the position information of the robot or the axle system.

## Revendications

1. Procédé pour déterminer la position spatiale d'un capteur (4) dans des positions d'enregistrement différentes, dans lequel, pour déterminer la position au niveau de chaque position individuelle parmi les différentes positions d'enregistrement :
on obtient tout d'abord, avec des moyens d'obtention d'une information de position grossière, une information de position grossière par une détection grossière de la position du capteur, et
puis, la position plus précise du capteur est déterminée par mesure d'au moins trois réflecteurs (3) montés sur le capteur avec un système de poursuite laser (1),
la plage de recherche du laser du système de poursuite laser pour les réflecteurs étant limitée à l'aide de l'information de position grossière,
**caractérisé en ce que**
l'information de position grossière est obtenue à partir des informations de position d'un robot ou d'un système d'axes d'un autre type, avec lequel le capteur est déplacé.

2. Procédé selon la revendication 1, dans lequel la position des au moins trois réflecteurs reste inchangée après le montage sur le capteur, et la position des réflecteurs est déterminée par rapport au capteur et/ou les uns par rapport aux autres.

3. Procédé selon la revendication précédente, dans lequel la position relative des réflecteurs est déterminée par mesure avec le système de poursuite laser.

4. Procédé de détermination de la position spatiale d'un capteur (4) dans différentes positions d'enregistrement, comprenant :
des moyens (2) pour obtenir une information de position grossière par une détection grossière de la position du capteur dans chaque position individuelle des différentes positions d'enregistrement,
un système de poursuite laser (1) pour déterminer la position plus précise du capteur par mesure de la position d'au moins trois réflecteurs (3) montés sur le capteur, et
des moyens pour limiter la plage de recherche du laser du système de poursuite laser pour les réflecteurs à l'aide de l'information de position grossière,
**caractérisé par**
un robot ou un système d'axes d'un autre type pour déplacer le capteur et des moyens pour obtenir l'information de position grossière à partir des informations de position du robot ou du système d'axes.
